# EUROPÄISCHE PATENTSCHRIFT

(11) **EP 0 755 309 B1**
(45) Veröffentlichungstag und Bekanntmachung des Hinweises auf die Patenterteilung: **23.12.1998**
(21) Anmeldenummer: 95915796.7
(22) Anmeldetag: 18.04.1995
(51) Int. Cl.: B08B 9/02, B23G 9/00

(54) **REINIGUNGSEINRICHTUNG FÜR BOLZEN ODER GEWINDE**
CLEANING DEVICE FOR BOLTS OR THREADS
ACCESSOIRE DE NETTOYAGE POUR BOULONS OU FILETAGES

(30) Priorität: 15.04.1994 DE 4413036; 14.09.1994 DE 9414907 U
(43) Veröffentlichungstag der Anmeldung: 29.01.1997
(73) Patentinhaber: Beissner, Holger, 21723 Hollern (DE)
(72) Erfinder: BEISSNER, Hans-Wilhelm, D-21723 Hollern (DE)
(74) Vertreter: Bergmeier, Werner, Dipl.-Ing.
(86) Internationale Anmeldenummer: DE9500532
(87) Internationale Veröffentlichungsnummer: WO9528237

(56) Entgegenhaltungen:
- DE-U- 9 313 722
- GB-A- 957 180
- US-A- 3 495 288

## Beschreibung

Die Erfindung betrifft eine Reinigungseinrichtung für Bolzen oder Gewinde.

Eine mögliche Gewinde-Reinigungseinrichtung, die mit radial verstellbaren Bürstenleisten arbeitet und die aus zwei konzentrischen Rohrstücken besteht, die gegeneinander umfänglich verstellt werden können, ist in DE-U 93 13 722.2 beschrieben, das am 25. November 1993 öffentlich zugänglich wurde. Die Radial-Verstellung erfolgt mit umfänglich verteilten Stellnocken an einem der Rohrstücke.

Die Reinigungseinrichtung gemäß dem Stand der Technik hat an dem rückwärtigen Endabschnitt der erwähnten konzentrischen Zylinderstücke eine Antriebsvorrichtung, die **mit einem zentralen Antriebsbolzen** versehen ist. Er (dort 1) ist fest mit dem inneren Rohrstück (dort 2) verbunden und dreht damit die konzentrischen beiden Rohrstücke (dort Innenhülse 2 und Außenhülse 4) um den zu reinigenden Gewindebolzen. Die Länge der Rohrstücke bestimmt die max. Länge des zu reinigenden Gewindes.

Die Erfindung möchte hier Abhilfe schaffen und stellt sich **die Aufgabe**, den Anwendungsbereich des Reinigungsvorsatzes zu erweitern, möchte aber auch eine einfache Montage, zuverlässige Vorspannung und geringe Verletzungsgefahr bewirken.

Das wird mit der Erfindung erreicht, deren tragende Merkmale der Anspruch 1 angibt.

Auch dann, wenn der Antrieb nur langsam läuft, **um hohe Reinigungskraft** aufbringen zu können, können die von den eingangs erwähnten Stellnocken verstellbaren Bürstenleisten bei Verstellbewegungen nach radial außen **von selbst** in ihre Rückzugsstellungen, in denen sie an den Stellnocken anliegen, geführt werden, wenn Fingerfedern gem. Anspruch 1 eingesetzt werden. Die langgestreckten Federn in Blatt-, Stab- oder Drahtform (Anspruch 18) sind am Außenumfang des Bürstenhalters (Zylinders) fest angeordnet. Ihre freien Enden ragen in Queröffnungen der Bürstenleisten, die radial verschieblich in Schlitzen geführt sind. Je stärker (weiter) die Bürstenleisten nach innen verschoben werden, desto stärker wirkt das freie Ende der Fingerfedern auf sie, um sie nach außen zu drücken. Diese Vorspannung gibt Ihnen **ein sicheres Anliegen** an den Stellnocken, auch wenn die Drehzahl klein ist.

Einfache Montage, zuverlässige Vorspannung und geringe Verletzungsgefahr zeichnen diese Variante aus. Weil die Bürstenleisten oft gewechselt werden müssen, besteht durch ein schlaufenförmiges freies Ende (Anspruch 17) nur geringe Gefahr der Verletzung. Die Bürstenleisten werden radial - z.B. mit einem Schraubendreher - ausgeworfen, die Fingerfedern geben sie frei und schnappen (federn) leicht in ihre Ruhestellung zurück.

Die Fingerfedern kommen mit den Stellnocken nicht in Berührung und bleiben auch bei Lösen des Verstellzylinders (der um die Außenwand des Bürstenträgers liegt) fest mit dem Bürstenträger verbunden und exakt positioniert.

Die Nuten, in denen die Fingerfedern befestigt werden, können als Sehnenabschnitte gestaltet sein (Anspruch 11), wobei ein jeweiliger Sehnenabschnitt symmetrisch zu der jeweiligen Stellöffnung liegt, in der die Bürstenleiste geführt ist. Zwischen zwei nebeneinander oder hintereinander angeordneten Sehnenabschnitten kann in Axialrichtung oder Radialrichtung ein kurzes Stück des ursprünglichen Außendurchmessers des Bürstenträgers verbleiben. Dadurch ergibt sich - in der jeweils senkrechten Richtung (axial → radial; radial → axial) eine bessere Führung der Bürstenleisten. Das freie Ende kann so gestaltet sein, daß in eingefahrenem Zustand die Enden der Fingerfeder auf den sehnenförmigen Nutabschnitt zu liegen kommen (Anspruch 16). Damit entsteht eine Sperre, so daß die Bürsten weder einwärts noch (wegen ihrer Federwirkung) auswärts herausfallen. Im Ruhezustand reicht das freie Ende der Finger in den hinteren Abschnitt der Queröffnungen der Bürsten, insbesondere die letzte Hälfte.

Bei geringerer Drehzahl der Reinigungsbürsten können sie über Fingerfedern in ihre Rückzugsstellung vorgespannt werden, auch dann, wenn die Fliehkraft dazu nicht ausreicht.

Es können längere Gewinde gereinigt werden. Es können aber auch kurze Gewindeabschnitte gereinigt werden, die weit unten an einem ansonsten langgestreckten Bolzen liegen. Die Gefahr des Verkantens wird vermieden, weil der erwähnte axiale Abstand von umfänglicher Kraftaufbringung zu umfänglicher Bremskraft nur sehr kurz ist und sich zusätzlich die Möglichkeit bietet, daß die Antriebseinheit von zwei oder mehr Seiten gehalten und geführt werden kann.

Der Durchmesser der zu reinigenden Bolzen oder Gewinde kann erheblich erhöht und gleichzeitig ein größerer Bereich überdeckt werden, wenn verschiedene Reinigungsvorrichtungen austauschbar vor dieselbe Antriebseinheit gespannt werden. Der Antrieb kann sowohl bei tragbaren als auch bei stationären Reinigungsgeräten eingesetzt werden.

Im praktischen Betrieb haben sich Bolzen- oder GewindeDurchmesser von 20 bis 200 mm bequem reinigen lassen.

Die Erfindung wird nachfolgend anhand von Ausführungs**beispielen** näher erläutert.
- **Figur 1**: veranschaulicht eine Aufsicht auf eine beispielhafte Antriebseinheit, mit einem linksseitigen und einem rechtsseitigen Haltegriff 50,51 und einem mittigen Zylinder-Abschnitt 20, der drehbar an drei Drehlagern 12,13,11 (umfänglich) gelagert ist.
- **Figur 1a, Figur 1b**: zeigen (links) eine Seitenansicht und (rechts) einen Querschnitt durch den Bürstenträger 2 mit Bürstenleisten 10a, 10b und zwei beispielhaft herausgegriffene axial beabstandeten Fingerfedern 1a, 1b, von denen mehrere am Umfang verteilt sein können.
- **Figur 2**: veranschaulicht eine teilweise im Schnitt dargestellte Seitenansicht der in Figur 1 erwähnten Ausführung, wobei die Antriebseinheit einen Gerätekörper 40 aufweist, an dem der Antriebsmotor 1 nach aufwärts ragend und seitlich aus der Zentralachse 100 versetzt angeordnet ist.
- **Figur 3**: veranschaulicht eine Aufsicht auf den zylindrischen Innenkörper 2 einer beispielhaften Reinigungsvorrichtung 70 mit einer darin eingesetzten Bürstenleiste 10a. Der Innenkörper 2 ist auch in Figur 2 am unteren Ende erkennbar.
- **Figur 4**: zeigt einen Querschnitt durch den Innenkörper 2 von Figur 3, bei dem die Form der Bürstenleiste 10a deutlicher wird. Auch wird die Form des radialen Einschnittes in den Innenkörper 2 deutlich, in dem die Bürstenleiste 10a in radialer Richtung bewegbar ist, durch den Eingriff von Stellnocken 5a,5b, wie sie in Figur 1 veranschaulicht werden.

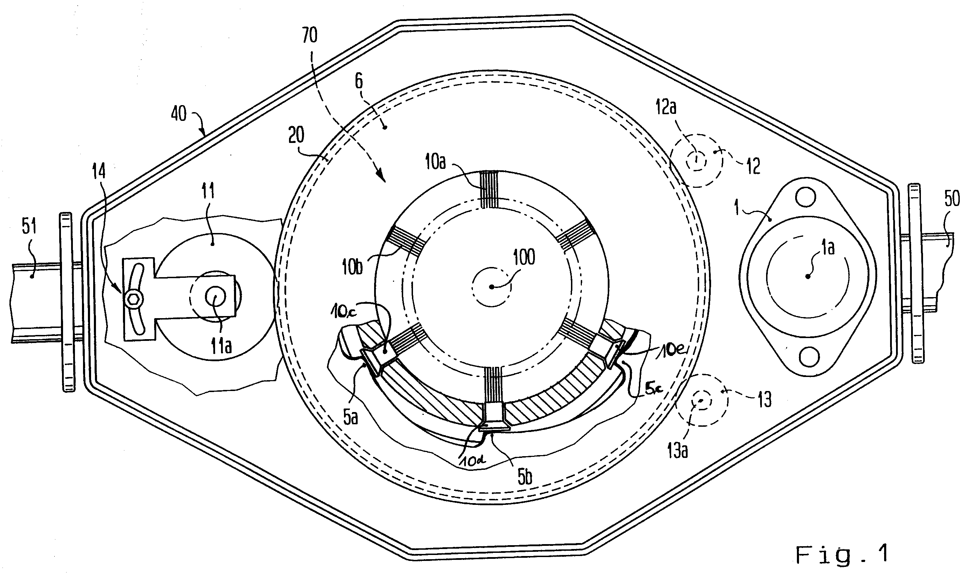

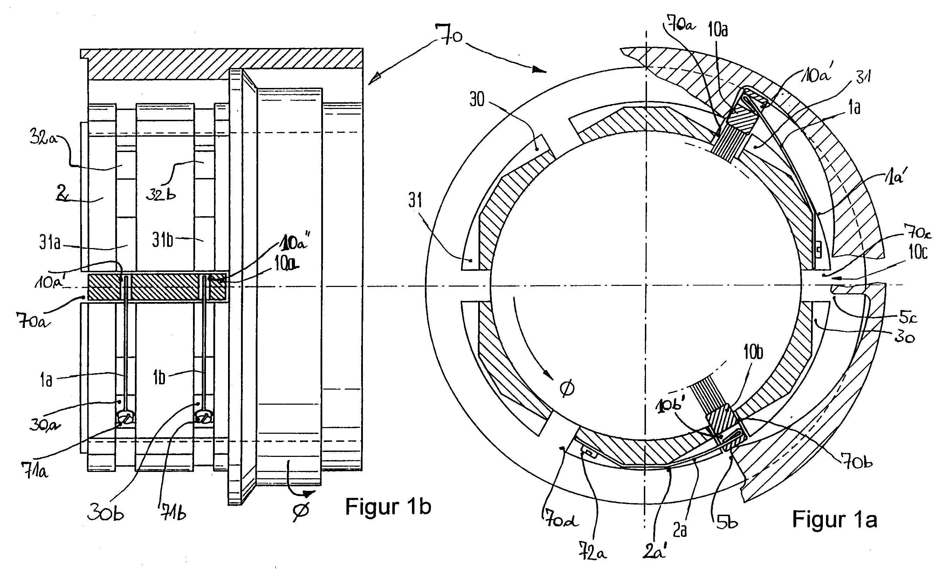

Der Antriebsmotor in **Figur 1** - dem ersten Ausführungsbeispiel - ist mit seiner Achse 1a deutlich seitlich versetzt gegenüber der Zentralachse 100 des Reinigungsvorsatzes 70 und der Achse 100 der Antriebsvorrichtung mit Gerätekörper 40. Der Gerätekörper kann als Rahmen oder als Träger mit weitgehenden seitlichen Abdeckungen gestaltet sein, er weist im wesentlichen elliptische Gestalt auf, kann aber auch polygonale Form haben. In seiner Längsachse sind seitlich abragend zwei Haltegriffe 50,51 angeordnet, an der die Antriebseinheit gehalten und geführt wird. Einer der Haltegriffe kann als Dreh/Schaltgriff ausgeführt sein, um den Motor 1 ein/auszuschalten.

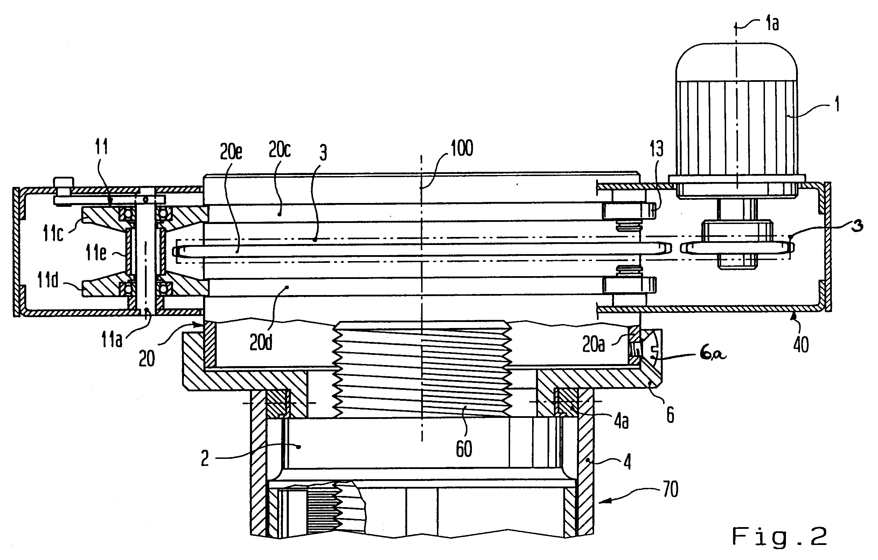

Der Motor 1 treibt über ein Umlauforgan, eine Kette oder einen Zahnriemen 3 (vgl. Figur 2), der umfänglich an dem Ankopplungs-Zylinderstück 20 angreift, dasselbe an. Dazu weist das Rohrstück 20 einen vollumfänglichen Zahnkranz 20e auf, der in seiner Teilung mit derjenigen des Zahnriemens oder Kette 3 harmonisiert. Der Antriebsmotor 1 weist ein entsprechend dem Übersetzungsverhältnis gewähltes Ritzel auf, so daß ein Drehantreiben aus einer seitlichen Antriebsmotor-Lage auf den zentralen Ring 20 möglich wird.

Das so dreh-angetriebene hohlzylindrische Kopplungsorgan 20 ist in einer axialen Richtung mit einem Anflanschbereich 20a versehen, an dem ein Reduzier-Flansch 6 der jeweiligen Reinigungsvorrichtung 70 drehfest (Im Beispiel die Festlegeschraube 6a) angeordnet werden kann. Der Reduzierflansch 6 ist im Beispiel **der Figur 2** topfförmig ausgestaltet, mit einem Ringbereich, der in seiner axialen Höhe an die axiale Erstreckung des Anflanschbereiches 20a des Ankopplungstücks 20 angepaßt ist.

Der Reduzier-Flansch 6 ist an jeder Reinigungsvorrichtung 70 vorgesehen, die mit der Antriebseinheit verbunden werden soll, mit ihr wird der Übergang von dem feststehenden Durchmesser des Ankopplungsringes 20 auf den jeweiligen Durchmesserbereich des jeweiligen Reinigungsvorsatzes ausgeglichen. Sind die Durchmesser gleich, kann der Reduzierflansch entfallen.

Die in **Figur 1** in ihrer räumlichen Lage erkennbaren und die **in Figur 2** in ihrem axialen Aufbau ersichtlichen Lager 11,12,13 lagern das Ankopplungs-Rohrstück 20 zuverlässig und gleichzeitig einstellbar.

Das eine der erwähnten drei Lager, das hinsichtlich der Mittelachse 100 dem Antriebsmotor 1 gegenüber auf dem Gerätekörper 40 vorgesehen ist, ist mittels eines Exzenters oder einer anderen geeigneten Einstellvorrichtung 14 verstellbar ausgestaltet. Seine Verstellbewegung orientiert sich in der Ebene, in der auch das umlaufende Antriebsorgan 3, die Kette oder der Keilriemen, umläuft. Mit ihrer Verstellbewegung in Richtung auf den Motor zu ist diese umfängliche Lagerung in der Lage, den Antriebs-Rohrabschnitt 20 gegen die beiden anderen Lager 12,13 zu drücken und so für eine stabile Lagerung in dieser Ebene zu sorgen.

Mit der Einstellmöglichkeit wird auch das Nachstellen der umfänglichen Lagerung ermöglicht, das durch Abnutzung oder starke Beanspruchung entstehen kann.

Die erwähnten Lager 11,12,13 und der Antriebsmotor 1 sind am günstigsten so an dem Gerätekörper 40 befestigt, daß der Motor 1 mit seiner Mittelachse 1a, die Zentralachse 100 des Gerätes und die Achse 11a des gegenüberliegenden Lagers 11 mit ihren Durchstoßpunkten der Umlaufebene in einer geraden Linie angeordnet sind. Die Punkte liegen in der Umlauf-Ebene und die Gerade ist etwa senkrecht zur Mittelachse 100. Seitlich versetzt gegenüber dieser Verbindungslinie sollten die beiden anderen Führungs/Andrucklager 12,13 sein, die nahe dem Antriebsmotor 1 vorgesehen sind.

Die Lager 11,12,13 können aus einfachen Wälzlagern bestehen, es können aber auch Doppelring-Kugellager verwendet werden, bei denen ein Innenring gegenüber einem äußeren Ring über dazwischenliegende Kugeln leicht drehbar gelagert ist. Solche Kugellager empfehlen sich für das obere und untere Teillager der antriebsnahen Lager 12,13, solche Kugellager empfehlen sich aber auch für die Lager-Konstruktion 11, die mittels eines Exzenters 14 in einer Ebene gegen den Antriebsring 20 verstellbar ist.

In letzterem Lager 11 werden zwei dieser Doppelring-Kugellager von einer Abstandshülse 11e beabstandet, auf jedem der beiden Kugellager ist eine im wesentlichen scheibenförmig gestaltete Umsetzscheibe 11c,11d fest angebracht, die mit ihrem äußeren Umfang in die Führungsnuten 20c,20d des Antriebsringes 20 eingreift.

Die Umsetzscheiben 11c,11d können im Querschnitt auch leicht trapezförmig gestaltet werden, so daß eine konische Passung an den erwähnten Nuten 20c,20d des Antriebsringes 20 erreicht wird.

Der Zahnkranz 20e am äußeren Umfang des Antriebsringes 20 ist etwa mittig zwischen den beiden Außennuten 20c,20d vorgesehen, er wirkt zusammen mit der schon erläuterten Antriebskette oder dem erwähnten Zahnriemen 3, der motorseitig 1,1a angetrieben wird.

Die zu reinigenden Gewinde 60 werden in der Achse 100 durch den Antrieb 1,20,40 und durch den Reinigungsvorsatz 70 geführt.

Die in Radialrichtung verstellbaren Bürsten 10a,10b mit ihren die Verstellbewegung ermöglichenden Stellnocken 5a,5b, die an dem äußeren Stellring 4 angeordnet sind, sind **in Figur 1** ersichtlich. Sie liegen um die Achse 100 umfänglich verteilt.

Hinsichtlich des näheren Aufbaus einer möglichen Reinigungsvorrichtung als austauschbarer Vorsatz und des Zusammenwirkens der beiden zylindrischen Rohrabschnitte 4,20 und hinsichtlich ihrer konzentrischen Fixierung mit einem Ringstück 4a wird auf die **schon erwähnte DE-U 93 13 722.2** verwiesen.

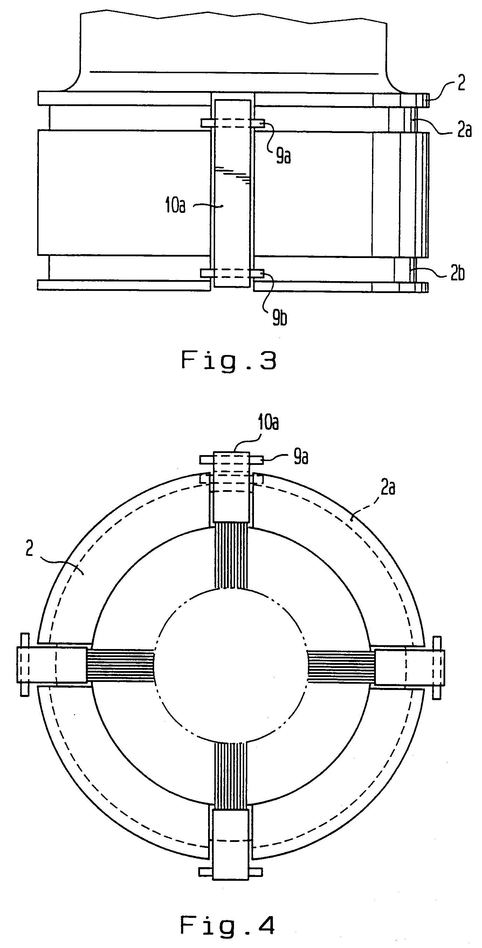

Eine gegenüber den dort beschriebenen Bürstenleisten alternative Form von Bürstenleisten ist **in den Figuren 1a und 1b** oder aber **in den Figuren 3 und 4** veranschaulicht.

**Figur 1a, Figur 1b** veranschaulichen Fingerfedern, die die Bürstenleisten selbsttätig zurückholen und radial nach außen an die Stellnocken andrücken. Jeweils ein Paar von Fingerfedern 1a, 1b ist axial beabstandet am Träger 2 angebracht. **Die Figur 1b** zeigt ein solches Paar. Auch die sehnenförmigen Nuten 30a, 30b und 31a, 31b sind erkennbar, in denen die Fingerfedern befestigt sind, bzw. über die sie mit ihrem freien Ende ragen.

Das freie Ende der Fingerfedern 1a,1b greift in Queröffnungen 10a',10a'' der Bürstenleisten, so daß einer Einwärts-Bewegung der Reinigungsbürsten ständig eine Federkraft nach radial außen gegenübersteht. Sind mehrere axial beabstandete Federn vorgesehen, ergibt sich gute Parallelführung der Bürsten 10a.

Die Federkraft kann bei geringer Radialerstreckung durch Abknikken erhöht werden. Sind sehnenförmige Nutenstücke 30a,30b, 31a,31b, 32a,32b, ... abschnittsweise am Umfang verteilt, kann die Befestigung 71a,71b der Federn in den Nuten erfolgen, während sie mit ihrer Knickstelle 1a' am jeweiligen Ende im Übergang zu einem nicht genuteten Umfangsabschnitt des Bürstenträgers aufliegen.

Der Träger 2 ist in diesem Beispiel axial nur kurz und hat 6 Stellöffnungen 70a,70b,70c,70d für Bürstenleisten 10a,10b,10c, ... Die Anzahl der Stellöffnungen variiert abhängig vom Durchmesser des Trägers 2.

Der Antrieb dreht Bürstenträger 2 und die federnd eingespannten Bürstenleisten in Drehrichtung ø. Die radiale Stellkraft der Fingerfedern ist besonders bei geringer Drehzahl des Antriebes vorteilhaft.

Eine gegenüber den beschriebenen Bürstenleisten alternative Form von Bürstenleisten ist **in den Figuren 3 und 4** veranschaulicht. Während die Bürstenleisten im Stand der Technik eine Querschnittsform hatten, die im oberen Bereich etwa trapezförmig war, wird von den Figuren 3 und 4 vorgeschlagen und hier beanspruchbar niedergelegt, daß die Bürstenleisten einen etwa rechteckförmigen Querschnitt haben sollen. Die axiale Fixierung und die radiale Verstellmöglichkeit ergibt sich aus zwei quer in ihren (oberen) Rückenteil eingebrachten Stiften 9a,9b, die in umfängliche Außennuten 2a,2b eingreifen. Die Außennuten 2a,2b können am vorderen und am hinteren Endbereich des Bürstenträgers 2 (dem inneren Zylinderabschnitt) angeordnet werden.

Es können auch mehr als zwei querverlaufende Haltestifte im Bürstenrücken vorgesehen werden, dann werden mehr als zwei Nuten 2a,2b am äußeren Umfang des innenliegenden Bürstenträgers des Reinigungsvorsatzes erforderlich.

## Patentansprüche

1. **Reinigungseinrichtung** für Bolzen oder Gewinde mit einer Andruckeinrichtung für in ihrem Radial-Reinigungseingriff verstellbare, sich axial erstreckende Bürstenleisten (10a,10b, 10c,...) der Reinigungseinrichtung (70), dadurch gekennzeichnet, daß die Reinigungseinrichtung (70) eine Bürstenleistenrückholeinrichtung mit Fingerfedern (1a,1b;2a,2b) aufweist, die derart mit den Bürstenleisten zusammenwirken, daß einer Einwärtsbewegung der Reinigungsbürsten durch die Andruckeinrichtung ständig eine Federkraft nach radial außen gegenübersteht.

2. Einrichtung nach Anspruch 1, dadurch gekennzeichnet, daß die Fingerfedern (1a,1b;2a,2b) umfänglich langgestreckt sind.

3. Einrichtung nach einem der vorhergehenden Ansprüche, dadurch gekennzeichnet, daß die Fingerfedern (1a,1b;2a,2b) einseitig an dem zylindrischen Bürstenträger (2) angeordnet (71a,71b, 72a,72b) sind und mit ihrem freien Ende tangential vom ihm abragen.

4. Einrichtung nach einem der vorhergehenden Ansprüche, dadurch gekennzeichnet, daß das freie Ende der Fingerfedern (1a,1b; 2a,2b) zum Eingriff in Queröffnungen (10a',10a''; 10b',10b''; 10c',10c'')der Bürstenleisten (10a,10b,10c,...) ausgebildet ist.

5. Einrichtung nach einem der vorhergehenden Ansprüche, dadurch gekennzeichnet, daß das freie Ende der Fingerfedern (1a,1b;2a, 2b) radial außerhalb von Axialschnitten (70a, 70b, 70c) des Bürstenträgers (2) zu liegen kommt, und daß in die Axialschnitte (im folgenden 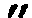 Stellöffnungen" genannt) die Bürstenleisten (10a,10b,10c) radial verschieblich einsetzbar sind.

6. Einrichtung nach einem der vorhergehenden Ansprüche, dadurch gekennzeichnet, daß zwei oder drei Fingerfedern (1a,1b; 2a,2b) axial benachbart am Bürstenträger (2) angeordnet sind.

7. Einrichtung nach einem der vorhergehenden Ansprüche, dadurch gekennzeichnet, daß die Fingerfedern (1a,1b;2a,2b) in umfänglich orientierten Nuten (30a, 30b; 31a, 31b; kurz: 30,31,32, ...) berührungslos geführt sind und sich darin frei bewegen können.

8. Einrichtung nach einem der vorhergehenden Ansprüche, dadurch gekennzeichnet, daß die Fingerfedern (1a,1b;2a,2b) nahe ihrem an dem Bürstenträger (2) fest angebrachten Ende abgeknickt (1a',1b'; 2a',2b') sind.

9. Einrichtung nach einem der vorhergehenden Ansprüche, dadurch gekennzeichnet, daß der Abstand der Befestigungsstelle der Federn (1a,1b;2a,2b) von dem Knick (1a',2a') und von der benachbarten Stellöffnung (70c) gering ist.

10. Einrichtung nach einem der vorhergehenden Ansprüche, dadurch gekennzeichnet, daß die Nuten (30,31,32) im Bürstenträger (2) umfänglich verschiedene Tiefe aufweisen, insbesondere an der Befestigungsstelle (71a,71b) tiefer sind als zwischen zwei Stellöffnungen (70a,70b).

11. Einrichtung nach einem der vorhergehenden Ansprüche, dadurch gekennzeichnet, daß jede Nut (30,31,32) aus einer sehnenförmigen Vertiefung mit insbesondere rechteckförmigem Querschnitt besteht, die symmetrisch zu jeder Stellöffnung (70a,70b,70c) im Bürstenträger (2) angeordnet ist.

12. Einrichtung nach einem der vorhergehenden Ansprüche, dadurch gekennzeichnet, daß ihr eine langsam drehende Antriebseinheit mit einem Reinigungsvorsatz (70) zugeordnet ist.

13. Einrichtung nach einem der vorhergehenden Ansprüche, dadurch gekennzeichnet, daß die Antriebseinheit einen drehbar gelagerten (11,12,13) hohlzylindrischen Ankopplungsring (20;20a) und einen aus seiner und der Mittelachse (100) des Reinigungsvorsatzes (70) seitlich versetzten Antriebsmotor (1;1a) aufweist.

14. Einrichtung nach einem der vorhergehenden Ansprüche, dadurch gekennzeichnet, daß der Antriebsmotor (1;1a) und der Ankopplungsring (20;20a) über eine Kette, einen Keilriemen oder ein Zahnband als rutschsicheres Antriebs-Umlauforgan (3) gekoppelt sind.

15. Einrichtung nach einem der vorhergehenden Ansprüche, dadurch gekennzeichnet, daß der hohlzylindrische Ankopplungsring (20,20a) axial nach beiden Seiten offen ist und einseitig einen zylindrischen Anflanschbereich (20a) aufweist, an welchem der ebenfalls beidseitig axial offene Reinigungsvorsatz (70) drehfest, aber austauschbar angebracht (6,6a) ist.

16. Einrichtung nach einem der vorhergehenden Ansprüche, dadurch gekennzeichnet, daß die Fingerfedern (1,2) eine Länge haben, die im entspannten Zustand vor dem jenseitigen Rand der Queröffnung (10a',10a'') der Bürstenleiste (10a) zu liegen kommt und bei radial einwärts gedrückter Bürstenleiste (10a) nahe am jenseitigen Rand zu liegen kommt.

17. Einrichtung nach einem der vorhergehenden Ansprüche, dadurch gekennzeichnet, daß das freie Ende der Fingerfedern (1,2) eine Schlaufe aufweist.

18. Einrichtung nach einem der vorhergehenden Ansprüche, dadurch gekennzeichnet, daß die Fingerfedern (1,2) als Blatt- oder Stabfedern, insbesondere aus Federdraht, bestehen.

## Claims

1. Cleaning device for bolts or threads with a contact pressure device for brush strips (10a, 10b, 10c, etc.) which can be adjusted in their radial cleaning engagement and extend in an axial direction on the cleaning device (70), characterised by the fact that the cleaning device (70) has a brush strip recovery device with finger springs (1a, 1b, 2a, 2b) which interacts with the brush strips in such a way that an inwards movement by the cleaning brushes by the contact pressure device is always opposed by a spring force which acts in a radial direction towards the outside.

2. Device as set out in claim 1, characterised by the fact that the finger springs (1a, 1b, 2a, 2b) are elongated in their circumferences.

3. Device as set out in one of the preceding claims, characterised by the fact that the finger springs (1a, 1b, 2a, 2b) are fitted on one side to the cylindrical brush support (2) (71a, 71b, 72a, 72b) and their free ends project out of it at a tangent.

4. Device as set out in one of the preceding claims, characterised by the fact that the free ends of the finger springs (1a, 1b, 2a, 2b) are designed to engage in the lateral apertures (10a', 10a''; 10b', 10b''; 10c', 10c'') of the brush strips (10a, 10b, 10c, etc.).

5. Device as set out in one of the preceding claims, characterised by the fact that the free ends of the finger springs (1a, 1b, 2a, 2b) come to rest in a radial direction outside axial sections (70a, 70b, 70c) of the brush support (2) and that the brush strips (10a, 10b, 10c) can be inserted in the axial sections (hereinafter known as "adjustment apertures) such that they can be slid in a radial direction.

6. Device as set out in one of the preceding claims, characterised by the fact that two or three finger springs (1a, 1b, 2a, 2b) are positioned next to the brush support (2) in an axial direction.

7. Device as set out in one of the preceding claims, characterised by the fact that the finger springs (1a, 1b, 2a, 2b) are guided in peripheral grooves (30a, 30b, 31a, 31b; in short: 30, 31, 32, etc.) without contact and can move freely within these grooves.

8. Device as set out in one of the preceding claims, characterised by the fact that the finger springs (1a, 1b, 2a, 2b) are kinked (1a', 1b', 2a', 2b') near their ends which are secured to the brush support.

9. Device as set out in one of the preceding claims, characterised by the fact that the distance of the securing point of the springs (1a, 1b, 2a, 2b) from the kink (1a', 2a') and from the neighbouring adjustment aperture (70c) is small.

10. Device as set out in one of the preceding claims, characterised by the fact that the grooves (30, 31, 32) in the brush support (2) have varying depths on their circumferences, and in particular they are deeper at the securing point (71a, 71b) than between two adjustment apertures (70a, 70b).

11. Device as set out in one of the preceding claims, characterised by the fact that each groove (30, 31, 32) consists of a chord-shaped recess with in particular a right-angled cross-section, which is positioned symmetrically to each adjustment aperture (70a, 70b, 70c) in the brush support (2).

12. Device as set out in one of the preceding claims, characterised by the fact that it has a slow turning drive unit with a cleaning device (70) end assigned to it.

13. Device as set out in one of the preceding claims, characterised by the fact that the drive unit has a revolving mounted (11, 12, 13) hollow cylindrical coupling ring (20, 20a) and a drive motor (1, 1a) offset to the side relative to its own and the centre axis (100) of the cleaning device (70).

14. Device as set out in one of the preceding claims, characterised by the fact that the drive motor (1, 1a) and the coupling ring (20, 20a) are connected by a chain, a V-belt or a toothed belt to form a non-slip rotary organ (3).

15. Device as set out in one of the preceding claims, characterised by the fact that the hollow cylindrical coupling ring (20, 20a) is open in the axial direction at both sides and on one side has a cylindrical flanging area (20a) to which the cleaning device (70) which is also open in the axial direction at both sides is attached such that it cannot turn but can be replaced (6, 6a).

16. Device as set out in one of the preceding claims, characterised by the fact that the finger springs (1, 2) are of a length which, when relaxed, brings them to rest before the opposite side edge of the lateral aperture (10a', 10a'') of the brush strip (10a) and when the brush support (10a) is pressed inwards in the radial direction, brings them to rest near the opposite side edge.

17. Device as set out in one of the preceding claims, characterised by the fact that the free end of the finger springs (1, 2) has a loop.

18. Device as set out in one of the preceding claims, characterised by the fact that the finger springs (1, 2) take the form of leaf or rod springs, in particular made of spring wire.

## Revendications

1. Dispositif de nettoyage pour boulons ou filets de vis pourvu d'un dispositif presseur pour les tiges de balais (10a; 10b; 10 c...) du dispositif de nettoyage (70) qui se développent axialement et qui sont réglables dans leur engrenure de nettoyage axiale, caractérisé par le fait que le dispositif de nettoyage (70) présente un dispositif de rappel avec ressorts de contact (1a; 1b; 2a; 2b) agissant conjointement sur les tiges de balais de façon telle qu'à chaque mouvement vers l'avant des balais de nettoyage s'oppose en permanence grâce au dispositif presseur une force élastique agissant radialement vers l'extérieur.

2. Dispositif suivant revendication 1 caractérisé par le fait que les ressorts (1a; 1b; 2a; 2b) sont dimensionnellement tirés en longueur.

3. Dispositif suivant l'une des revendications précédentes, caractérisé par le fait que les ressorts de contact (1a; 1b; 2a; 2 b) sont sur le porte-balais cylindrique (2) disposés unilatéralement (71a, 71b, 72a, 72b) et que leur extrémité libre le dépasse tangentiellement.

4. Dispositif suivant l'une des revendications précédentes, caractérisé par le fait que l'extrémité libre des ressorts de contact (1a; 1b; 2a; 2 b) est conçu de façon à s'accrocher dans les orifices transversaux (10a', 10a''; 10b', 10b''; 10c', 10C'') des tiges de balais (10a, 10b, 10c,...).

5. Dispositif suivant l'une des revendications précédentes, caractérisé par le fait que l'extrémité libre des ressorts de contact (1a; 1b; 2a; 2 b) vient se coucher radialement à l'extérieur de rainures axiales (70a, 70b, 70c) du porte-balais (2) et que dans la rainure axiale (ci-après désignée par orifices de réglage), les tiges de balais (10a, 10b, 10 c) peuvent être insérées et déplacées radialement.

6. Dispositif suivant l'une des revendications précédentes, caractérisé par le fait que deux ou trois des ressorts de contact (1a, 1b; 2a, 2b) sont disposés axialement à proximité l'un de l'autre sur le porte-balais (2).

7. Dispositif suivant l'une des revendications précédentes, caractérisé par le fait que les ressorts de contact (1a, 1b; 2a, 2b) sont insérés sans contact dans des rainures orientées dimensionnellement (30a, 30b; 31a, 31b; en abrégé 30, 31, 32, ...) et qu'ils peuvent s'y mouvoir librement.

8. Dispositif suivant l'une des revendications précédentes, caractérisé par le fait que les ressorts de contact (1a, 1b; 2a, 2b) forment un angle brisé à proximité de leur extrémité (1a', 1b'; 2a', 2b') fixée au porte balais (2).

9. Dispositif suivant l'une des revendications précédentes, caractérisé par le fait que la distance du point de fixation des ressorts (1a, 1b; 2a, 2b) à l'angle brisé (1a', 2a') et aux orifices de réglage voisines est faible.

10. Dispositif suivant l'une des revendications précédentes, caractérisé par le fait que les rainures (30,31,32) dans le porte-balais (2) présentent dimensionnellement une profondeur différente, en étant plus profondes en particulier au droit du point de fixation (71a, 71b) qu''entre les deux orifices de réglage (70a, 70b).

11. Dispositif suivant l'une des revendications précédentes, caractérisé par le fait que chaque rainure (30,31,32) est formée par un creux en forme de corde avec, particulièrement, une section rectangulaire et que ce creux est symétrique à chaque orifice de réglage (70a, 70b, 70c) dans le porte-balais (2).

12. Dispositif suivant l'une des revendications précédentes, caractérisé par le fait qu'elle est complétée par un mécanisme de commande tournant lentement avec un nettoyeur additionnel (70)

13. Dispositif suivant l'une des revendications précédentes, caractérisé par le fait que le mécanisme de commande présente une bague d'accouplement cylindrique creux (20; 20a) sur palier rotatif (11,12,13) et un moteur de commande (1; 1a) latéralement décalé de son axe médian et de l'axe médian (100) du nettoyeur additionnel (70).

14. Dispositif suivant l'une des revendications précédentes, caractérisé par le fait que le moteur de commande (1; 1a) et la bague d'accouplement (20; 20a) sont raccordés via une chaîne, une courroie trapézoïdale ou une bande dentée en tant que dispositif rotatif de commande anti-glisse (3).

15. Dispositif suivant l'une des revendications précédentes, caractérisé par le fait que que la bague d'accouplement cylindrique creuse (20;20a) est ouverte axialement des deux côtés et que d'un côté elle présente une bride d'accouplement cylindrique (20a) sur laquelle le nettoyeur additionnel (70) également ouvert axialement des deux deux côtés (70) est fixé de façon à résister à toute rotation tout en étant amovible (6, 6a).

16. Dispositif suivant l'une des revendications précédentes, caractérisé par le fait que les ressorts de contact (1,2) ont une longueur telle qu'à l'état détendu, ils se trouvent en amont de l'autre bord de l'orifice transversale (10a', 10a'') de la tige de balais (10a) et que lorsque la tige de balais (10a) est rentrée radialement par pression, ils se trouvent près de l'autre bord.

17. Dispositif suivant l'une des revendications précédentes, caractérisé par le fait que l'extrémité libre des ressorts de contact (1,2) présente une boucle.

18. Dispositif suivant l'une des revendications précédentes, caractérisé par le fait que les ressorts de contact sont des ressorts à lames ou à barres, composées en particulier de fil d'acier pour ressort.
